# EUROPÄISCHE PATENTSCHRIFT

(11) **EP 0 817 509 B1**
(45) Veröffentlichungstag und Bekanntmachung des Hinweises auf die Patenterteilung: **20.10.1999**
(21) Anmeldenummer: 97401187.6
(22) Anmeldetag: 29.05.1997
(51) Int. Cl.: H04Q 3/00

(54) **Verbindungsaufbauverfahren sowie Vermittlungsstellen, und Dienststeuereinheit**
Procedure for the construction of connections, automatic communications, and service steering unit
Procédé pour la construction des connexions de communication automatique, et unité de réglement de service

(30) Priorität: 30.05.1996 DE 19621717
(43) Veröffentlichungstag der Anmeldung: 07.01.1998
(73) Patentinhaber: ALCATEL, 75008 Paris (FR)
(72) Erfinder: Stahl, Uwe, 71229 Leonberg (DE); Lautenschlager, Wolfgang, 71287 Weissach-Flacht (DE)
(74) Vertreter: Zinsinger, Norbert

(56) Entgegenhaltungen:
- US-A- 5 023 868
- US-A- 5 051 992
- US-A- 5 375 167

## Beschreibung

Die Erfindung betrifft ein Verbindungsaufbauverfahren nach dem Obergbegriff von Anspruch 1, eine Vermittlungsstelle nach dem Oberbegriff von Anspruch 11, eine Vermittlungsstelle nach dem Oberbegriff von Anspruch 12 und eine Dienststeuereinheit nach dem Oberbegriff von Anspruch 13.

Bei üblichen Verbindungsaufbauverfahren wird eine Verbindungsanforderung mittels einer in ihr eingetragenen Rufnummer des gerufenen Teilnehmers zum Teilnehmeranschluß des gerufenen Teilnehmers geleitet. Die Rufnummer gibt den Weg durch das Kommunikationsnetz vor und wird während des Weges Schritt für Schritt ausgewertet, d. h. sie adressiert zuerst den Ortsnetzbereich und die Teilnehmervermittlungsstelle und sodann den Teilnehmeranschluß des gerufenen Teilnehmers innerhalb des Numerierungsbereiches der Teilnehmervermittlungsstelle. Rufnummernportabilität ist bei diesen Verfahren nur innerhalb des Numerierungsbereiches einer Teilnehmervermittlungsstelle möglich.

In dem US-Patent 5,375,167 ist nun eine Möglichkeit aufgezeigt, Rufnummernportabilität in einem größeren Numerierungsbereich zu ermöglichen.

Bei dem dort beschriebenen Verfahren werden die Numerierungsbereiche von mehreren untergeordneten Vermittlungsstellen von einer übergeordneten Vermittlungstelle verwaltet. Numerierungs-Blöcke werden hierbei bei Bedarf von einer der untergeordneten Vermittlungsstellen angefordert und von der übergeordneten Vermittlungsstelle zugeteilt. Die Anrufleitung erfolgt im folgenden durch die übergeordnete Vermittlungstelle gemäß der so zustande gekommenen Zuordnungen.

Durch alle diese Verfahren ist es jedoch nicht möglich, eine Rufnummernportabilität zwischen Teilnehmeranschlußnetzen verschiedener Netzbetreiber in einer deregulierten Netzumgebung zu ermöglichen, in der mehrere Teilnehmeranschlußnetze verschiedener Netzbetreiber im selben geographischen Bereich zur Verfügung stehen.

Die Erfindung geht nun von einem Verbindungsaufbauverfahren in einer deregulierten Netzumgebung aus, wie es im Bericht "High level service description for number portability" der "Public Network Operators - Interest Group", 29 Juni 94, als mögliche Lösung für die Realisierung der Rufnummernportabilität im Vereinigten Königreich (UK) vorgeschlagen wird.

Rufnummernportabilität wird durch Umwertung der Rufnummer mittels Anrufweiterschaltung oder mittels eines IN-Dienstes (IN = Intelligent Network) realisiert. Wechselt ein Teilnehmer innerhalb eines Ortsnetzbereiches von einem ersten Netzbetreiber zu einem zweiten Netzbetreiber und will seine Rufnummer mitnehmen, so wird eine solche Anrufweiterleitung im Anschlußnetz des ersten Netzbetreibers installiert. Wird eine Verbindungsanforderung mit dieser Rufnummer von einem Dienst des ersten Netzes erkannt, so wird die Verbindungsanforderung in das zweite Netz umgeleitet.

Diese Umleitung wird dadurch realisiert, daß anstelle der ursprünglichen Rufnummer eine neue Rufnummer in die Verbindungsanforderung eingetragen wird, die den gerufenen Teilnehmer gemäß eines zweiten, speziell für diesen Fall geschaffenen Addressierungsschemas addressiert.

Dieses Verbindungsaufbauverfahren bringt die Nachteile mit sich, daß zwei verschiedenartige Adressierungsarten für Teilnehmer unterstützt werden müssen und daß doppelt so viele Rufnummern pro Teilnehmer verbraucht werden. Diese führt u. a. zu Problemen mit dem begrenzten Rufnummernvorrat (ab 1.1.97 15 Ziffern) in öffentlichen Fernsprechnetzen.

Der Erfindung liegt nun die Aufgabe zugrunde, Rufnummernportabilität zwischen Teilnehmern unterschiedlicher Teilnehmernetzbetreiber zu ermöglichen, die sich ein und denselben Numerierungsbereich teilen.

Diese Aufgabe wird gelöst durch ein Verbindungsaufbauverfahren nach der Lehre von Anspruch 1 sowie durch Vermittlungstellen und eine Dienststeuereinheit nach der Lehre von Anspruch 11, 12 bzw. 13.

Der Erfindung liegt der Gedanke zugrunde, zusätzlich zur Rufnummer, die den Teilnehmer im Numerierungsbereich eines geographischen Bereiches beschreibt, eine Kennung in der Verbindungsanforderung zu transportieren, die den Netzbetreiber beschreibt, dem der Teilnehmer im Teilnehmeranschlußbereich zugeordnet ist. Der Netzbetreiber stellt somit eine zusätzliche, redundante Dimension der Adressierung eines Teilnehmeranschlusses dar. Durch die Einführung dieser Kennung wird eine einfachere und vor allem einheitliche Anrufleitung möglich, bei der eine Verbindungsanforderung nur durch Auswertung dieser Parameter zum gerufenen Teilnehmer geleitet werden kann.

Bei dem geographischen Bereich handelt es sich im einfachsten Fall um einen Ortsnetzbereich. Es kann sich bei ihm aber auch um den Bereich eines ganzen Landes oder Kontinents handeln. Entscheidend ist allein der gemeinsamme, von mehreren Teilnehmeranschlußnetz-Betreibern verwendbare Numerierungsbereich.

Eine Umwertung und Veränderung der Rufnummer ist bei diesem Vorgehen nicht erforderlich, so daß keine Kontabilitätsprobleme und keine Probleme mit dem begrenzten Rufnummernvorrat öffentlicher Fernsprechnetze auftreten.

Ein weiterer Vorteil ist, daß ein solches Verfahren zur Anrufleitung ohne tiefe Eingriffe in das heute bestehende Fernsprechnetz integrierbar ist.

Die Betreiber-Kennung wird hierbei vorteilhafterweise mittels eines IN-Dienstes aus der Rufnummer des gerufenen Teilnehmers ermittelt und in die Verbindungsanforderung eingetragen.

Es ist jedoch auch möglich, daß die Betreiber-Kennung vom Endgerät des Teilnehmers festgelegt wird und das Endgerät den Eintrag der Betreiber-Kennung in die Verbindungsanforderung veranlaßt. Dadurch ist auch auf einfache, kostengünste Art und Weise ein Notbetrieb beim Ausfall des IN-Dienstes realisierbar.

Ein Notbetrieb ist darüberhinaus bei Anwendung des erfindungsgemäßen Verfahrens bei weitem einfacher zu realisieren als bei den bekannten Anrufleitverfahren. Bei diesen wäre bei Ausfall der Umwerteinrichtung die aus der ursprünglichen Rufnummer erzeugte neue Rufnummer und damit der gewünschte Teilnehmeranschluß nicht mehr auffindbar.

Im folgenden wird die Erfindung anhand eines Ausführungsbeispiels unter Zuhilfenahme beiliegender Zeichnungen beispielhaft erläutert.
- Fig. 1: zeigt ein Blockschaltbild eines Kommunikationssystems.
- Fig. 2: zeigt ein Blockschaltbild einer erfindungsgemäßen Vermittlungstelle und einer erfindungsgemäßen Dienssteuereinheit für das Kommunikationssystem nach Fig. 1.
- Fig. 3: zeigt ein Blockschaltbild einer erfindungsgemäßen Vermittlungsstelle für das Kommunikationssystem nach Fig. 1.

Im Ausführungsbeispiel wird die Durchführung des erfindungsgemäßen Verfahrens zur Anrufleitung in einem Kommunikationssystem mit erfindungsgemäßen Vermittlungsstellen und einer erfindungsgemäßen Dienststeuereinheit erläutert.

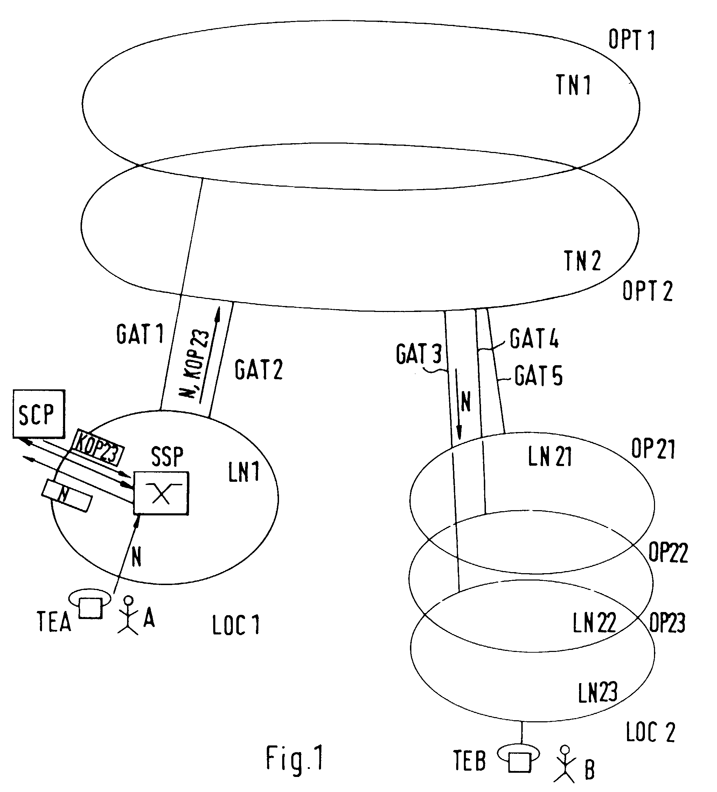

Fig. 1 zeigt ein Kommunikationssystem mit zwei Fernnetzen TN1 und TN2 und 4 Teilnehmeranschlußnetzen LN1 bis LN23. Über das Teilnehmeranschlußnetz LN1 werden Teilnehmer in einem Ortsnetzbereich LOC1 und über die Teilnehmeranschlußnetze LN21 bis LN23 Teilnehmer in einem Ortsnetzbereich LOC2 angeschlossen. Von den an die Teilnehmeranschlußnetze LN1 bis LN23 angeschlossenen Endgeräte sind nur zwei Endgeräte TEA und TEB beispielhaft gezeigt, die an das Teilnehmeranschlußnetz LN1 bzw. LN23 angeschlossen sind und zwei Teilnehmern A bzw. B zugeordnet sind. Die Teilnehmeranschlußnetze LN1 bis LN23 sind über Netzübergänge mit den Fernnetzen TN1 und TN2 verbunden, von denen beispielhaft fünf Netzübergänge GAT1 bis GAT5 gezeigt sind.

Die Fernnetze TNI und TN2 stellen übliche Fernnetze dar, die dem Bereitstellen von Fernsprech-Verbindungen zwischen Vermittlungsstellen dienen. Die Fernnetze TN1 und TN2 sind hierbei zwei unterschiedlichen Fernnetzbetreibern OPT1 und OPT2 zugeordnet.

Die beiden Fernnetze TN1 und TN2 sind gleichermaßen mit den Teilnehmeranschlußnetzen der Ortsnetzbereiche verbunden, so daß Verbindungen zwischen Teilnehmeranschlußnetzen verschiedener Ortsnetzbereiche sowohl über das Fernnetz TN1 als auch über das Fernnetz TN2 aufgebaut werden können. Es ist somit möglich, für jede Fernverbindung zwischen zwei möglichen Fernnetzen TN1 und TN2 und somit zwischen zwei Netzbetreibern OPT1 und OPT2 zu wählen, die u. U. unterschiedliche Konditionen für die Bereitstellung von Fernverbindungen gewähren.

Es ist auch möglich, daß in dem Kommunikationssystem lediglich ein Fernnetz für die Verbindung der Teilnehmeranschlußnetze der Ortsnetzbereiche LOC1 und LOC2 zur Verfügung steht.

Bei den Teilnehmeranschlußnetzen LN1 bis LN23 handelt es sich um übliche Anschlußnetze für den Anschluß von Fernsprechendgeräten und Nebenstellenanlagen. Mögliche Fernsprechendgeräte sind hierbei Telefone, Faxgeräte, aber auch Modems und Schnittstellenkarten für den Anschluß von Datenverarbeitungsanlagen. Es kann sich hierbei sowohl um analoge Endgeräte als auch um ISDN-Endgeräte (ISDN = Integrated Services Digital Network) handeln. Bei den Endgeräten TEA und TEB handelt es sich um solche Fernsprechendgeräte.

Die Teilnehmeranschlußnetze LN1 bis LN23 werden jeweils von ein oder mehreren Teilnehmervermittlungsstellen gebildet. Von diesen Teilnehmervermittlungsstellen ist beispielhaft eine Vermittlungsstelle SSP des Teilnehmeranschlußnetzes LN1 gezeigt. Alle Endgeräte von Teilnehmern, die einem der Teilnehmeranschlußnetze LN1 bis LN23 zugordnet sind, sind über Teilnehmeranschlußleitungen mit solch einer Teilnehmeranschlußvermittlungsstelle des jeweiligen Teilnehmeranschlußnetzes verbunden. Größer Teilnehmeranschlußnetzen können aufgrund der höheren Verkehrsbelastung auch Transitvermittlungsstellen enthalten. Die Teilnehmervermittlungsstellen eines Teilnehmeranschlußnetzes sind über Querleitungen untereinander und mit einer oder mehreren Transitvermittlungsstellen der Fernetze TN1 und TN2 verbunden. Es ist auch möglich, daß Teilnehmervermittlungsstellen unterschiedlicher der Teilnehmeranschlußnetze LN21 bis LN23 über Querleitungen miteinander verbunden sind.

Es ist auch möglich, daß es sich bei den Teilnehmeranschlußnetzen LN1 bis LN23 um Funknetze handelt, beispielsweise um Mobilfunk-Netze nach dem GSM-Standart (GSM = Globale System for Mobile Communications) oder um Funk-Netze nach dem DECT-Standart (DECT = Digital Enhanced Cordless Telephone). Solche Funk-Schnittstellen können auch Bestandteil eines oder mehrerer Vermittlungsstellen des Teilnehmeranschlußnetzes sein, d. h. lediglich ein Teil der Teilnehmer des Teilnehmeranschlußnetzes ist über ein oder mehrere Funknetze angeschlossen.

Die Teilnehmeranschlußnetze LN21 bis LN23 sind drei unterschiedlichen Netzbetreibern OP21 bis OP23 zugeordnet. Da die Teilnehmeranschlußnetze LN21 bis LN23 den selben Ortsnetzbereich LOC2 abdecken, teilen sich die Teilnehmeranschlußnetze LN21 bis LN23 den Numerierungsbereich des Ortsnetzbereiches LOC2. Die Teilnehmeranschlußnetze LN21 bis LN23 stehen somit parallel zueinander im selben geographischen Gebiet den dort ansäßigen Teilnehmern zur Verfügung. Die Teilnehmer des Ortsnetzbereiches LOC2 können somit auswählen, über welches der Teilnehmeranschlußnetze LN21 bis LN23 ihr Endgeräte oder ihre Endgeräte angeschlossen werden. Durch die Wahl des Teilnehmeranschlußnetzes wird der Teilnehmeranschlußnetzbetreiber und damit die für den Teilnehmeranschluß geltenden Kondition festgelegt. Im Gegensatz zur Wahl des Fernnetzbetreibers, die verbindungsindividuell ist, stellt die Wahl des Teilnehmeranschlußnetz eine Festlegung dar, die im Kommunikationssystem für das Auffinden des Teilnehmers bekannt sein muß. Die Wahl des Teilnehmeranschlußnetz-Betreibers stellt somit einen Freiheitsgrad des gerufenen Teilnehmers und nicht einen Freiheitsgrad des rufenden Teinehmers dar.

Im folgenden wird der Aufbau einer Verbindung zwischen Teilnehmer verschiedener Ortsnetzbereiche, nämlich dem rufenden Teilnehmer A und dem gerufenen Teilnehmer B beschrieben:

Der Teilnehmer A sendet über sein Endgerät TEA eine Verbindungsanforderung mit einer Rufnummer N des gerufenen Teilnehmers B an die Teilnehmervermittlungsstelle SSP, über die das Endgerät TEA angeschlossen ist.

Bei der Vermittlungsstelle SSP handelt es sich um eine besonders ausgestaltete Vermittlungsstelle, die Telekommunikationsdienste mittels einer Dienststeuereinheit SCP erbringt.

Die Vermittlungsstelle SSP ermittelt mittels der Dienststeuereinheit SCP, ob die Verbindungsanforderung an einen Teilnehmer eines Ortsnetzbereiches gerichtet ist, in dem mehrere Teilnehmeranschlußnetzbetreiber auftreten. Ist dies der Fall, so wird eine Nachricht mit der Rufnummer N an die Dienststeuereinheit SCP gesendet und von dieser aus der Rufnummer N der dem gerufenen Teilnehmer zugeordnete Teilnehmernetzbetreiber, nämlich der Netzbetreiber OP23 ermittelt. Eine Nachricht mit einer entsprechenden Betreiber-Kennung KOP23 wird zurück an die Vermittlungsstelle SSP gesendet. Die Kennung KOP23 wird sodann von der Vermittlungsstelle SSP in die Verbindungsanforderung zusätzlich zur Rufnummer N eingetragen.

Die Verbindungsanforderung besteht hierbei aus einem einzigen oder mehreren hintereinander gesendeten Signalisierungsdatenpaketen, die durch ein oder mehrere Kommunikationsnetze, hier die Kommunikationsnetze LN1, TN2 und LN23 vom rufenden Teilnehmer zur Teilnehmervermittlungsstelle des gerufenen Teilnehmer geleitet werden. Dieses oder diese Signalisierungsdatenpakte enthalten hierbei Zielinformationen, mittels denen die Leitweglenkung in den Vermittlungsstellen, die dieses Paket oder diese Pakete passieren, zum Aufbau einer Verbindung zwischen dem rufenden und dem gerufenen Teilnehmer gesteuert wird.

Es ist auch möglich, daß die Ermittlung der des Teilnehmeranschlußnetzbetreibers des gerufenen Teilnehmers von einer Logik der Vermittlungsstelle SSP durchgeführt wird und die Dienststeuereinheit SCP somit in die Vermittlungsstelle SSP integriert ist.

Zusätzlich zu der Kennung für den Teilnehmeranschlußbetreiber wird in die Verbindungsanforderung auch eine Kennung für den Fernnetzbetreiber eingetragen. Dieser ist nicht von dem gerufenen Teilnehmer abhängig und kann von dem Teilnehmer A frei gewählt werden. Der gewünschte Fernnetzbetreiber, nämlich der Fernnetzbetreiber OPT2, wird von dem Teilnehmer A über sein Endgerät TEA an die Vermittlungstelle signalisiert und anschließend in die Verbindungsanforderung eingetragen.

Es ist jedoch auch möglich, daß die Wahl des Fernnetzbetreibers in einem Datensatz der Vermittlungsstelle SSP für den Teilnehmer A bereit vorher festgelegt worden ist und daß somit auf eine solche Signalisierung verzichtet wird. Dasselbe ist der Fall, falls keine Auswahl eines Fernnetzbetreibers möglich ist.

Die Verbindungsanforderung wird nun von der Vermittlungsstelle SSP aufgrund der Rufnummer N und der Kennung für den Fernnetzbetreiber OPT2 an eine Vermittlungsstelle des Fernnetzes TN2 weitergeleitet. Gemäß der Rufnummer N wird die Verbindungsanforderung sodann durch das Fernnetz TN2 zu derjenigen Transitvermittlungsstelle geleitet, die für den Ortsnetzbereich LOC2 zuständig ist.

Es ist auch möglich, daß verschiedene Transitvermittlungsstellen für den Ortsnetzbereich LOC2 zuständig sind und daß somit die Betreiber-Kennung KNOP23 bereits vorher im Fernnetz TN2 ausgewertet wird.

Durch die Rufnummer N wird dieser Transitvermittlungsstelle angezeigt, daß die Verbindungsanforderung zu einer Teilnehmervermittlungsstelle des Ortnetzbereiches LOC2 weiterzuleiten ist. Die Betreiber-Kennung KLN23 zeigt an, daß die Verbindungsanforderung an das Teilnehmeranschlußnetz LN23 zu leiten ist. Gemäß dieser Auswertung der Rufnummer N und der Betreiber-Kennung KLN23 leitet die Transitvermittlungsstelle die Verbindungsanforderung sodann über den Netzzugang GAT3 an eine vorher festgelegte Vermittlungsstelle des Teilnehmeranschlußnetzes LN23. Die Auswertung der Betreiberkennung erfolgt somit beim Übergang vom Fernnetzbereich in den Ortsnetzbereich.

Stehen mehrere Netzübergänge zwischen dem Fernnetz TN2 und dem Teilnehmeranschlußnetz LN23 zur Verfügung so kann die Transitvermittlungsstelle die Verbindungsanforderung an eine von mehreren vorher festgelegten Vermittlungsstellen des Teilnehmeranschlußnetzes LN23 weiterleiten. Diese Auswahl erfolgt nach einem vorgegebenen Schema oder aufgrund der Rufnummer N.

Die Verbindungsanforderung wird von dieser Vermittlungsstelle des Teilnehmeranschlußnetzes LN23 sodann innerhalb des Teilnehmeranschlußnetzes LN23 mittels Auswertung der Rufnummer N zu derjenigen Teilnehmervermittlungsstelle geleitet, die den Teilnehmeranschluß für das Endgerät TEB des Teilnehmers B bereitstellt.

Die Ziel-Teilnehmervermittlungsstelle signalisiert sodann einen Ruf an das Endgerät TEB und baut die Verbindung zu ihm auf, wenn vom Teilnehmer B abgehoben wird.

Im folgenden wird der Aufbau einer Verbindung zwischen Teilnehmer beschrieben, die demselben Ortsnetzbereich aber verschiedenen Teilnehmeranschlußnetzen zugeordnet sind:

Erkennt die Teilnehmervermittlungstelle, an die der rufende Teilnehmer angebunden ist, daß eine solche Verbindungsanforderung nicht an einen über sie angebundenen Teilnehmer gerichtet ist, so bestimmt sie die Betreiber-Kennung des Teilnehmeranschlußnetzes, dem der gerufene Teilnehmer zugeordnet ist, analog zu oben aus der Rufnummer und trägt anschließend die Betreiber-Kennung in die Verbindungsanforderung ein. Aufgrund der Rufnummer leitet diese Vermittlungsstelle die Verbindungsanforderung sodann zu einer Vermittlungsstelle des Teilnehmeranschlußnetzes weiter, die eine Transitfunktion wahrnimmt. Diese Vermittlungsstelle wählt sodann mittels der Betreiberkennung dasjenige Querleitungsbündel aus, das einen Netzübergang zu dem Teilnehmeranschlußnetz des durch die Betreiber-Kennung bezeichneten Netzbetreibers bereitstellt.

Es ist auch möglich, daß keine Querleitungsbündeln zwischen den Teilnehmeranschlußnetzen eines Ortsnetzbereiches vorhanden sind. In diesem Fall würde die Verbindungsanforderung an eines der Transitnetze geleitet, das die Verbindungsanforderung sodann aufgrund der Betreiber-Kennung an das Ziel-Teilnehmeranschlußnetz leitet. Die Verbindung wird anschließend über das Transitnetz aufgebaut.

Es ist auch möglich, daß die Teilnehmervermittlungsstelle, über die der rufende Teilnehmer angeschlossen ist, selbst diese Transitfunktion wahrnimmt.

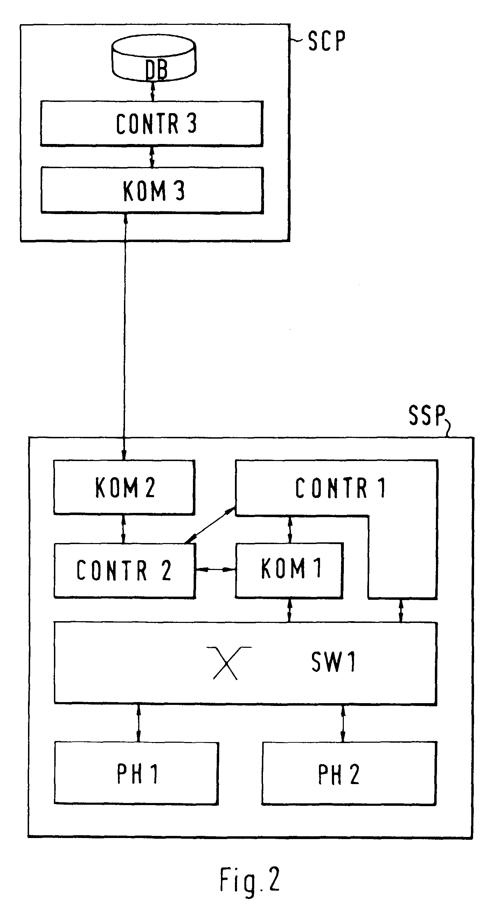

Anhand von Fig.2 wird nun der detailierte Aufbau der Vermittlungsstelle SSP und der Dienststeuereinheit SCP erläutert, mittels denen die Betreiberkennung bestimmt und in die Verbindungsanforderung eingetragen wird.

Fig. 2 zeigt die Vermittlungsstelle SSP und die Dienssteureinheit SCP, die miteinander verbunden sind. Die Vermittlungsstelle SSP weist ein Koppelnetz SW1, zwei Anschlußeinheiten PH1 und PH2, zwei Steuereinheiten CONTR1 und CONTR2 und zwei Kommunikationseinheiten KOM1 und KOM2 auf. Die Dienststeuereinheit SCP weist eine Datenbank DB, eine Steuereinheit CONTR3 und eine Kommunikationseinheit KOM3 auf.

Die Anschlußeinheiten PH1 und PH2 und die Kommunikationseinheit KOM1 tauschen Daten über das Koppelnetz SW1 aus, das von der Steuereinheit CONTR1 gesteuert wird. Die Steuereinheit CONTR2 tauscht mit der Steuereinheit CONTR1, und den Kommunikationseinheiten KOM1 und KOM2 Steuerdaten aus. Die Steuereinheit CONTR3 greift auf die Datenbank DB zu und tauscht mit der Kommunikationseinheit KOM3 Daten aus, die ihrerseit mit der Kommunikationseinheit KOM2 verbunden ist und so die Verbindung zur Vermittlungsstelle SSP bereitstellt.

Die Anschlußeinheiten PH1 und PH2 stellen Funktionen bereit, die den Teilnehmeranschluß von Endgeräten, insbesondere auch des Endgerätes TEA und den Anschluß von Querleitungsbündeln zu anderen Vermittlungsstellen ermöglichen.

Die Kommunikationseinheit KOM1 enthält die notwendigen hard- und softwaremäßigen Funktionsgruppen, die den Empfang von Verbindungsanforderungen von Endgeräten und das Senden von Verbindungsanforderungen an andere Vermittlungsstellen ermöglichen. Die empfangenen und die gesendeten Verbindungsanforderungen können hierbei unterschiedliche Form besitzen, beispielsweis werden ISDN-Verbindungsanforderungen oder analoge Verbindungsanforderung (Impuls- oder Tonwahl) empfangen und Verbindungsanforderungen nach dem Nr. 7 Signalisierungssystem gesendet.

Die Kommunikationseinheiten KOM2 und KOM3 stellen die Übertragung von Nachrichten zwischen der Vermittlungsstelle SSP und der Dienststeuereinheit SCP bereit. Der Nachrichtenaustausch entspricht hierbei den nach dem IN-Konzept (IN=Intelligent Network) festgelegten Mechanismen. So ist es beispielsweise möglich, daß weitere Vermittlungsstelle auf die gleiche Weise ebenfals mit der Dienststeuereinheit SCP verbunden sind und somit die Dienststeuereinheit ihren Dienst zentral für mehrere Vermittlungsstellen erbringt. Es ist hierbei nicht erforderlich, daß diese Vermittlungsstellen demselben Netzbetreiber oder demselben Ortsnetzbereich zugeordnet sind.

Die Steuereinheiten CONTR1 und CONTR2 bestehen aus Steuerprogrammen, die auf der Datenverarbeitungsplattform der Vermittlungsstelle SSP ablaufen. Die Steuereinheit CONTR1 ist hierbei für die übliche Steuerung des Verbindungsaufbaus zuständig.

Die Steuereinheit CONTR2 ist für die Einbindung der Dienssteuereinheit SCP und für das Eintragen der Betreiber-Kennung zuständig.

Ermittelt die Steuereinheit CONTR2 aus der Rufnummer N, daß der Ruf nicht an einen Teilnehmer der Vermittlungstelle SSP gerichtet ist, so sendet sie über die Kommunikationseinheiten KOM2 und KOM3 eine Anforderungsnachricht mit der Rufnummer N an die Steuereinheit CONTR3. Diese meldet ihr sodann zurück, wie die der Rufnummer N zuzuordnende Betreiber-Kennung lautet oder zeigt an, daß die Verbindungsanforderung an einen Teilnehmer desselben Teilnehmeranschlußnetzes oder an einen Teilnehmer eines Teilnehmeranschlußnetzes gerichtet ist, das das einzige Teilnehmeranschlußnetz in einem Ortsbereich darstellt. Wird der Steuereinheit CONTR2 eine Betreiber-Kennung gemeldet, so trägt sie diese in die zu sendende Verbindungsanforderung ein.

Es ist auch möglich, daß nicht jeder Ruf zu einem Teilnehmer, der nicht ein Teilnehmer der Vermittlungsstelle SSP ist, generell zum Senden einer Anforderungsnachricht an die Steuereinheit CONTR3 führt. Beispielsweise kann für solche Rufe der Verbindungsaufbau ganz normal durchgeführt werden und das Senden der Anforderungsnachricht erst durch eine Rückmeldung ausgelöst werden, daß der Teilnehmer im Ziel-Teilnehmeranschlußnetz nicht auffindbar ist. Erst in diesem Fall wird dann durch die Steuereinheit CONTR3 die Betreiber-Kennung ermittelt und durch die Steuereinheit CONTR2 in die Verbindungsanforderung eingetragen. Der Aufbau einer Verbindung wird sodann erneut durch das Weiterleiten dieser veränderten Verbindungsanforderung versucht.

Wird zwischen den Vermittlungsstellen der Kommunikationsnetze LN1 bis LN23 und TN1 und TN2 das Nr. 7 Signalisierungssystem verwendet, so kann diese Kennung beispielsweise analog zur TNS (=Transit Network Selection) in dem der Verbindungsanforderung entsprechenden Nachrichtenpaket eingetragen werden.

Von der Datenbank DB wird ein Datensatz verwaltet, der eine Zuordnung von Betreiber-Kennungen von Teilnehmernetzbetreibern zu Rufnummern enthält. So sind beispielsweise die Rufnummern der Teilnehmer des Teilnehmeranschlußnetzes LN23 die Betreiberkennung KLN23 zugeordnet. Bei Änderung der Rufnummer eines Teilnehmers oder bei Wechsel des Teilnehmernetzbetreibers durch einen Teilnehmer muß die Datenbank DB entsprechend abgeglichen werden.

Die Steuereinheit CONTR3 ermittelt mittels der Datenbank DB die Betreiber-Kennung, die einer Rufnummer zugeordnet ist. Hierzu greift sie mit geeigneten Suchalgorithmen auf die Datenbank DB zu.

Es ist möglich, daß die Vermittlungsstelle SSP nicht die Teilnehmervermittlungsstelle ist, über die der rufende Teilnehmer angebunden ist. Es kann sich bei ihr um eine andere Vermittlungsstelle des Ursprungs-Teilnehmeranspruchsnetzes handeln, zu der eine Verbindungsanforderung geleitet wird, wenn beispielsweise festgestellt wird, daß eine Verbindunganforderung nicht an einen Teilnehmer des Ursprungs-Teilnehmeranschlußnetzes gerichtet ist. Vorteilhafterweise handelt es sich hierbei um eine Transitvermittlungsstelle, die den Netzübergang zu der Fernnetzebene bereitstellt.

Bei der Vermittlungsstelle SSP kann es sich auch um eine Vermittlungsstelle eines der Fernnetze TN1 und TN2 handeln. Vorzugsweise könnte es sich um eine Vermittlungsstelle handeln, über die Teilnehmeranschlußnetze eines Ortsbereiches angeschlossen sind, in dem Teilnehmeranschlußnetze verschiedener Netzbetreiber bereitstehen.

Es ist auch möglich, daß die Vermittlungsstelle SSP in einem Teilnehmeranschlußnetz eines Ziel-Ortsnetzbereichs angesiedelt ist. Die Eintragung der Betreiber-Kennung würde somit beispielsweise in dem Fall einer Leitung der Verbindungsanforderung in ein falsches Teilnehmeranschlußnetz erfolgen.

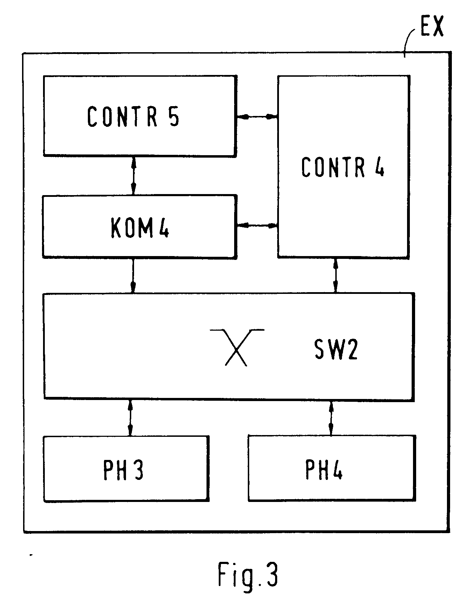

Anhand von Fig.3 wird nun der detailierte Aufbau einer Vermittlungsstelle erläutert, die eine Anrufleitung mittels einer Betreiber-Kennung durchführt, die den Ortsnetzbetreiber bezeichnet.

Fig. 3 zeigt eine solche Vermittlungsstelle EX. Die Vermittlungsstelle EX weist ein Koppelnetz SW2, zwei Anschlußeinheiten PH3 und PH4, eine Kommunikationseinheit KOM4 und zwei Steuereinheiten CONTR3 und CONTR4 auf. Die Anschlußeinheiten PH3 und PH4 und die Kommunikationseinheit KOM4 tauschen Daten über das Koppelnetz SW2 aus, das von der Steuereinheit CONTR4 gesteuert wird. Ein Datenaustausch kann auch über ein anderes Kommunikationsmedium, beispielsweise ein LAN (Local Area Network) erfolgen. Die Steuereinheit CONTR5 tauscht mit der Steuereinheit CONTR4 und der Kommunikationseinheit KOM4 Steuerdaten aus.

Die Anschlußeinheiten PH3 und PH4, das Koppelnetz SW2 und die Steuereinheit CONTR4 sind analog zu den Anschlußeinheiten PH1 und PH2, dem Koppelnetz SW1 und der Steuereinheit CONTR1 nach Fig. 2 aufgebaut.

Die Kommunikationseinheit KOM4 enthält die notwendigen hard- und softwaremäßigen Baugruppen zum empfang und zum senden von gleichartigen Verbindungsanforderungen.

Die Steuereinheit CONTR5 empfängt von der Kommunikationseinheit KOM4 sowohl die in einer Verbindungsanforderung eingetragene Rufnummer N als auch die Betreiber-Kennung KLN23. Allein mittels der Betreiber-Kennung KLN23 oder mittels der Betreiber-Kennung KLN23 und der Rufnummer N bestimmt die Steuereinheit sodann, über welches der an die Vermittlungstelle EX angeschlossenen Querleitungsbündel die Verbindungsanforderung weiterzuleiten ist. Diese Steuerinformation leitet die Steuereinheit CONTR5 sodann an die Steuereinheit CONTR4 weiter, die dieses Weiterleiten dann veranlaßt.

## Patentansprüche

1. Verbindungsaufbauverfahren, bei dem ein rufender Teilnehmer (A) eine Verbindung zu einem gerufenen Teilnehmer (B) anfordert, der einem geographischen Bereich (LOC2) zugeordnet ist, dessen Numerierungsbereich sich zwei oder mehr Teilnehmeranschlußnetze (LN21 bis LN23) verschiedener Netzbetreiber (OP21 bis OP23) teilen, und bei dem zum Aufbau der angeforderten Verbindung eine Verbindungsanforderung durch ein oder durch mehrere Kommunikationsnetze (LN1, TN2) zum Teilnehmeranschlußnetz (LN23) des gerufenen Teilnehmers (B) geleitet wird,
**dadurch gekennzeichnet**, daß als Teil der Verbindungsanforderung zusätzlich zu einer Rufnummer (N), die den gerufenen Teilnehmer (B) innerhalb des Numerierungsbereichs des geographischen Bereiches (LOC2) bestimmt, eine separate Betreiber-Kennung (KOP23) mitübertragen wird, die den Netzbetreiber (OP23) des Teilnehmeranschlußnetzes (LN23) des gerufenen Teilnehmers (B) bestimmt, und daß ein dem gerufenen Teilnehmer (B) zugeordneter Teilnehmeranschluß mittels der Rufnummer (N) und der Betreiber-Kennung (KOP23) ermittelt wird.

2. Verfahren nach Anspruch 1, dadurch gekennzeichnet, daß die Betreiber-Kennung (KLN23) aus der Rufnummer (N) des gerufenen Teilnehmer (B) ermittelt wird und in die Verbindungsanforderung eingetragen wird.

3. Verfahren nach Anspruch 2, dadurch gekennzeichnet, daß die Betreiber-Kennung (KOP23) zentral in einer zentralen Dienststeuereinheit (SCP) ermittelt wird.

4. Verfahren nach Anspruch 2, dadurch gekennzeichnet, daß die Betreiber-Kennung lokal in einer Vermittlungsstelle ermittelt wird.

5. Verfahren nach einem der Ansprüche 2 bis 4, dadurch gekennzeichnet, daß die Betreiber-Kennung (KLN23) von einer Vermittlungsstelle (SSP) desjenigen Teilnehmeranschlußnetzes (LN1), dem der rufende Teilnehmer (A) zugeordnet ist, in die Verbindungsanforderung eingetragen wird.

6. Verfahren nach einem der Ansprüche 2 bis 4, dadurch gekennzeichnet, daß die Betreiber-Kennung von einer Vermittlungsstelle eines Fernnetzes in die Verbindungsanforderung eingetragen wird.

7. Verfahren nach einem der Ansprüche 2 bis 4, dadurch gekennzeichnet, daß die Betreiber-Kennung von einer Vermittlungsstelle eines Ziel-Teilnehmeranschlußnetz in die Verbindungsanforderung eingetragen wird, wenn die Verbindungsanforderung zum falschen Ziel-Teilnehmeranschlußnetz geleitet worden ist.

8. Verfahren nach einem der Ansprüche 1 bis 7, dadurch gekennzeichnet, daß die Betreiber-Kennung (KOP23) beim Übergang vom Fernnetzbereich in den den Ortsnetzbereich (LOC2) ausgewertet wird.

9. Verfahren nach einem der Ansprüche 1 bis 7, dadurch gekennzeichnet, daß die Betreiber-Kennung in einem Teilnehmeranschlußnetz zur Auswahl von Querleitungen zu anderen Teilnehmeranschlußnetzen ausgewertet wird.

10. Verfahren nach einem der Ansprüche 1 bis 9, dadurch gekennzeichnet, daß in der Verbindungsanforderung eine weitere Betreiber-Kennung übertragen wird, die das für den Verbindungsaufbau zu verwendende Fernnetz (TN2) bestimmt.

11. Vermittlungsstelle (EX) mit einer Empfangseinheit (KOM4) zum Empfang einer Verbindungsanforderung, die eine Verbindung von einem rufenden Teilnehmer (A) zu einem gerufenen Teilnehmer (B) anfordert, mit Mitteln (CONTR5) zum Auswerten einer Verbindungsanforderung, die eine Verbindung zu einen gerufenen Teilnehmer (B) eines geographischen Bereiches (LOC2) anfordert, dessen Numerierungsbereich sich zwei oder mehr Teilnehmeranschlußnetze (LN21 bis LN23) verschiedener Netzbetreiber (OP21 bis OP23) teilen, und mit Mitteln (CONTR4) zum Weiterleiten einer Verbindungsanforderung an eine von mehreren weiteren Vermittlungsstellen,
**dadurch gekennzeichnet**, daß die Mittel (CONTR5) zum Auswerten so ausgestaltet sind, daß die weitere Vermittlungsstelle mittels einer separaten Betreiber-Kennung (KOP23) für einen Teilnehmeranschlußnetz-Betreiber (OP23) des geographischen Bereiches (LOC2) ermittelt wird, die zusätzlich zu einer Rufnummer (N), die den gerufenen Teilnehmer (B) innerhalb des Numerierungsbereich des geographischen Bereiches (LOC2) bestimmt, als Teil der Verbindungsanforderung mitübertragen wird.

12. Vermittlungsstelle (SSP) mit einer Empfangseinheit (KOM1) zum Empfang einer Verbindungsanforderung, die eine Verbindung von einem rufenden Teilnehmer (A) zu einem gerufenen Teilnehmer (B) anfordert, mit Mitteln (CONTR2) zum Verändern einer Verbindungsanforderung, die eine Verbindung zu einem gerufenen Teilnehmer (B) eines geographischen Bereiches (LOC2) anfordert, dessen Numerierungsbereich sich zwei oder mehr Teilnehmeranschlußnetze (LN21 bis LN23) verschiedener Netzbetreiber (OP21 bis OP23) teilen, und mit Mitteln (CONTR1) zum Weiterleiten der veränderten Verbindungsanforderung,
**dadurch gekennzeichnet**, daß die Mittel (CONTR2) zum Verändern so ausgestaltet sind, daß sie, zusätzlich zu einer bereits eingetragenen Rufnummer (N) des gerufenen Teilnehmers (B) im Numerierungsbereich des geographischen Bereiches (LOC2), eine separate Betreiber-Kennung (KOP23) für einen Teilnehmeranschlußnetz-Betreiber (OP23) des geographischen Bereiches (LOC2) in die Verbindungsanforderung einträgt.

13. Dienststeuereinheit (SCP) für den Aufbau einer Verbindung von einem rufenden Teilnehmer (A) zu einem gerufenen Teilnehmer (B), mit einer Empfangseinheit (KOM3) zum Empfang einer Rufnummer (N), die in einer die Verbindung anfordernde Verbindungsanforderung eingetragen ist, und mit Mitteln (CONTR3) zum Auswerten einer empfangenen Rufnummer (N), die den gerufenen Teilnehmer (B) innerhalb des Numerierungsbereichs eines geographischen Bereiches (LOC2) bestimmt, dessen Numerierungsbereich sich zwei oder mehr Teilnehmeranschlußnetze (LN21 bis LN23) verschiedener Netzbetreiber (OP21 bis OP23) teilen,
**dadurch gekennzeichnet**, daß die Mittel (CONTR3) zum Auswerten so ausgestaltet sind, daß sie aus der Rufnummer (N) des gerufenen Teilnehmers (B) eine Betreiber-Kennung (KOP23) ermitteln, die den Netzbetreiber (OP23) desjenigen Teilnehmeranschlußnetzes (LN23) des geographischen Bereiches (LOC2) bezeichnet, dem der gerufene Teilnehmer (B) zugeordnet ist, und daß sie die Eintragung dieser Betreiber-Kennung (KOP23) zusätzlich zur Rufnummer (N) in die Verbindungsanforderung veranlassen.

## Claims

1. Process for establishing a connection, in which a calling subscriber (A) requests a connection to a called subscriber (B) who is assigned to a geographic area (LOC2), whose number range is shared by two or more subscriber access networks (LN21 to LN23) of different network operators (OP21 to OP23), and in which process, in order to establish a requested connection, a call request is routed through one or more communications networks (LN1, TN2) to the subscriber access network (LN23) of the called subscriber (B), characterised in that as part of the call request, in addition to a directory number (N) which determines the called subscriber (B) within the number range of the geographical area (LOC2), a separate operator code (KOP23) is transmitted which determines the network operator (OP23) of the subscriber access network (LN23) of the called subscriber (B), and that a subscriber line assigned to the called subscriber (B) is determined by means of the directory number (N) and the operator code (KOP23).

2. Process according to claim 1, characterised in that the operator code (KLN23) is determined from the directory number (N) of the called subscriber (B) and is entered in the call request.

3. Process according to claim 2, characterised in that the operator code (KOP23) is determined centrally in a central service control unit (SCP).

4. Process according to claim 2, characterised in that the operator code is determined locally in a switching centre.

5. Process according to one of claims 2 to 4,
characterised in that the operator code (KLN23) is entered in the call request by a switching centre (SSP) of that subscriber access network (LN1) to which the calling subscriber (A) is assigned.

6. Process according to one of claims 2 to 4,
characterised in that the operator code is entered in the call request by a switching centre of a toll network.

7. Process according to one of claims 2 to 4,
characterised in that the operator code is entered in the call request by a switching centre of a destination subscriber access network, if the call request has been routed to the wrong destination subscriber access network.

8. Process according to one of claims 1 to 7,
characterised in that the operator code (KOP23) is evaluated during the transition from the toll network area to the local network area (LOC2).

9. Process according to one of claims 1 to 7,
characterised in that the operator code is evaluated in a subscriber access network in order to select tie lines to other subscriber access networks.

10. Process according to one of claims 1 to 9,
characterised in that a further operator code which determines the toll network (TN2) to be used for the establishment of the connection is transmitted in the call request.

11. Switching centre (EX) having a receiving unit (KOM4) for receiving a call request, which requests a call from a calling subscriber (A) to a called subscriber (B), with means (CONTR5) for evaluating a call request which requests a call to a called subscriber (B) of a geographical area (LOC2), whose number range is shared by two or more subscriber access networks (LN21 to LN23) of different network operators (OP21 to OP23), and with means (CONTR4) for forwarding a call request to one of several other switching centres, characterised in that the means (CONTR5) for evaluation are configured so that the other switching centre is determined by means of a separate operator code (KOP23) for a subscriber access network operator (OP23) of the geographical area (LOC2), which code is transmitted as part of the call request in addition to a directory number (N) which determines the called subscriber (B) within the number range of the geographical area (LOC2).

12. Switching centre (SSP) with a receiving unit (KOM1) for receiving a call request, which requests a call from a calling subscriber (A) to a called subscriber (B), with means (CONTR2) for modifying a call request which requests a call to a called subscriber (B) of a geographical area (LOC2), whose number range is shared by two or more subscriber access networks (LN21 to LN23) of different network operators (OP21 to OP23), and with means (CONTR1) for forwarding the modified call request, characterised in that the means (CONTR2) for modification are configured so that, in addition to a directory number (N) of the called subscriber (B) already entered in the number range of the geographical range (LOC2), said means enter into the call request a separate operator code (KOP23) for a subscriber access network operator (OP23) of the geographical area (LOC2).

13. Service control unit (SCP) for establishing a connection from a calling subscriber (A) to a called subscriber (B), having a receiving unit (KOM3) for receiving a directory number (N) that is entered in a call request requesting the call, and having means (CONTR3) for evaluating a received directory number (N) that determines the called subscriber (B) within the number range of a geographical area (LoC2), whose number range is shared by two or more subscriber access networks (LN21 to LN23) of different network operators (OP21 to OP23), characterised in that the means (CONTR3) for evaluation are configured so that they determine from the directory number (N) of the called subscriber (B) an operator code (KOP23) that designates the network operator (OP23) of that subscriber access network (LN23) of the geographical area (LOC2) to which the called subscriber (B) is assigned, and that said means cause this operator code (KOP23) to be entered in the call request in addition to the directory number (N).

## Revendications

1. Procédé pour établir une communication, dans lequel un abonné appelant (A) demande une communication avec un abonné appelé (B) qui est affecté à une zone géographique (LOC2) dont la zone de numérotation est partagée par deux ou plusieurs réseaux de postes d'abonnés (LN21 à LN23) de différents opérateurs de réseau (OP21 à OP23), et dans lequel, pour établir la communication demandée, une demande de communication est acheminée à travers un ou à travers plusieurs réseaux de communication (LN1, TN2) jusqu'au réseau de postes d'abonnés (LN23) de l'abonné appelé (B), caractérisé en ce que, comme faisant partie de la demande de communication, en plus d'un numéro d'appel (N) qui détermine l'abonné appelé (B) à l'intérieur de la zone de numérotation de la zone géographique (LOC2), une identification d'opérateur séparée (KOP23) est aussi transmise qui détermine l'opérateur de réseau (OP23) du réseau de postes d'abonnés (LN23) de l'abonné appelé (B), et en ce qu'un poste d'abonné affecté à l'abonné appelé (B) est détecté au moyen du numéro d'appel (N) et de l'identification d'opérateur (KOP23).

2. Procédé selon la revendication 1, caractérisé en ce que l'identification d'opérateur (KLN23) est détectée à partir du numéro d'appel (N) de l'abonné appelé (B) et enregistrée dans la demande de communication.

3. Procédé selon la revendication 2, caractérisé en ce que l'identification d'opérateur (KOP23) est détectée de façon centrale dans une unité de commande de service centrale (SCP).

4. Procédé selon la revendication 2, caractérisé en ce que l'identification d'opérateur est détectée localement dans un central téléphonique.

5. Procédé selon l'une quelconque des revendications 2 à 4, caractérisé en ce que l'identification d'opérateur (KLN23) est enregistrée dans la demande de communication par un central téléphonique (SSP) du réseau de postes d'abonnés (LN1) qui est affecté à l'abonné appelant (A).

6. Procédé selon l'une quelconque des revendications 2 à 4, caractérisé en ce que l'identification d'opérateur est enregistrée dans la demande de communication par un central téléphonique d'un réseau interurbain.

7. Procédé selon l'une quelconque des revendications 2 à 4, caractérisé en ce que l'identification d'opérateur est enregistrée dans la demande de communication par un central téléphonique d'un réseau de postes d'abonnés cible, quand la demande de communication a été acheminée à un réseau de postes d'abonnés cible erroné.

8. Procédé selon l'une quelconque des revendications 1 à 7, caractérisé en ce que l'identification d'opérateur (KOP23) est analysée lors du passage de la zone de réseau interurbain à la zone de réseau régional (LOC2).

9. Procédé selon l'une quelconque des revendications 1 à 7, caractérisé en ce que l'identification d'opérateur est analysée dans un réseau de postes d'abonnés pour la sélection de lignes transversales vers d'autres réseaux de postes d'abonnés.

10. Procédé selon l'une quelconque des revendications 1 à 9, caractérisé en ce que dans la demande de communication, une autre identification d'opérateur est transmise qui détermine le réseau interurbain (TN2) à utiliser pour établir la communication.

11. Central téléphonique (EX) avec une unité de réception (KOM4) pour recevoir une demande de communication qui demande une communication d'un abonné appelant (A) avec un abonné appelé (B), avec des moyens (CONTR5) pour analyser une demande de communication qui demande une communication avec un abonné appelé (B) d'une zone géographique (LOC2) dont la zone de numérotation est partagée par deux ou plusieurs réseaux de postes d'abonnés (LN21 à LN23) de différents opérateurs de réseau (OP21 à OP23), et avec des moyens (CONTR4) pour retransmettre une demande de communication à l'un de plusieurs centraux téléphoniques supplémentaires, caractérisé en ce que les moyens (CONTR5) d'analyse sont réalisés de sorte que le central téléphonique supplémentaire est détecté au moyen d'une identification d'opérateur séparée (KOP23) pour un opérateur de réseau de postes d'abonnés (OP23) de la zone géographique (LOC2) qui est transmise en plus d'un numéro d'appel (N), qui détermine l'abonné appelé (B) à l'intérieur de la zone de numérotation de la zone géographique (LOC2), comme faisant partie de la demande de communication.

12. Central téléphonique (SSP) avec une unité de réception (KOM1) pour recevoir une demande de communication qui demande une communication d'un abonné appelant (A) avec un abonné appelé (B), avec des moyens (CONTR2) pour modifier une demande de communication qui demande une communication avec un abonné appelé (B) d'une zone géographique (LOC2) dont la zone de numérotation est partagée par deux ou plusieurs réseaux de postes d'abonnés (LN21 à LN23) de différents opérateurs de réseau (OP21 à OP23), et avec des moyens (CONTR1) pour retransmettre la demande de communication modifiée, caractérisé en ce que les moyens (CONTR2) de modification sont réalisés de sorte qu'ils enregistrent dans la demande de communication, en plus d'un numéro d'appel (N) déjà enregistré de l'abonné appelé (B) dans la zone de numérotation de la zone géographique (LOC2), une identification d'opérateur séparée (KOP23) pour un opérateur de réseau de postes d'abonnés (OP23) de la zone géographique (LCC2).

13. Unité de commande de service (SCP) pour établir une communication d'un abonné appelant (A) avec un abonné appelé (B) avec une unité de réception (KOM3) pour recevoir un numéro d'appel (N), qui est enregistré dans une demande de communication demandant la communication, et avec des moyens (CONTR3) pour analyser un numéro d'appel reçu (N) qui détermine l'abonné appelé (B) à l'intérieur de la zone de numérotation d'une zone géographique (LOC2) dont la zone de numérotation est partagée par deux ou plusieurs réseaux de postes d'abonnés (LN21 à LN23) de différents opérateurs de réseau (OP21 à OP23), caractérisée en ce que les moyens (CONTR3) d'analyse sont réalisés de sorte qu'ils détectent à partir du numéro d'appel (N) de l'abonné appelé (B) une identification d'opérateur (KOP23) qui désigne l'opérateur de réseau (OP23) du réseau de postes d'abonnés (LN23) de la zone géographique (LOC2) à laquelle l'abonné appelé (B) est affecté, et en ce qu'ils provoquent l'enregistrement de cette identification d'opérateur (KOP23) dans la demande de communication en plus du numéro d'appel (N).
